# EUROPÄISCHE PATENTANMELDUNG

(11) **EP 0 982 528 A1**
(43) Veröffentlichungstag der Anmeldung: **01.03.2000**
(21) Anmeldenummer: 98115882.7
(22) Anmeldetag: 22.08.1998
(51) Int. Cl.: F16N 17/06, F16N 7/38

(54) **Schmierstoffgeber**

(71) Anmelder: DE LIMON FLUHME GMBH, D-40227 Düsseldorf (DE)
(72) Erfinder: Morgenstern, Gerhard, Dipl.-Ing., 40822 Mettmann (DE); Follert, Wolfgang, 44229 Dortmund (DE)
(74) Vertreter: Stenger, Watzke & Ring Patentanwälte

(57) **Zusammenfassung**

Die Erfindung betrifft einen Schmierstoffgeber zum kontinuierlichen und automatischen Schmieren von Maschinenteilen, insbesondere Lagern, mit einem an die zu schmierende Maschine (1) anschließbaren Gehäuse (3), in dem ein Schmierstoffreservoir (5) und eine Vorrichtung (6) zur dosierten Ausgabe des Schmierstoffs angeordnet sind. Um einen variabel arbeitenden Schmierstoffgeber (2) zu schaffen, der ohne Maschinenstillstand auf verschiedene Schmierstoff-Ausgabeprogramme umstellbar ist, wird vorgeschlagen, daß die Vorrichtung (6) zur Ausgabe des Schmierstoffs mit einer Steuerungs- und Kontrolleinrichtung (7) zum variablen Betrieb der Ausgabevorrichtung (6) versehen ist und die Steuerungs- und Kontrolleinrichtung (7) ein Empfangsteil (8) aufweist, über das an die Steuerungs- und Kontrolleinrichtung (7) drahtlos ferngesteuert Betriebs- und/oder Servicedaten übermittelbar sind.

## Beschreibung

Die Erfindung betrifft einen Schmierstoffgeber zum kontinuierlichen und automatischen Schmieren von Maschinenteilen, insbesondere Lagern, mit einem an die zu schmierende Maschine anschließbaren Gehäuse, in dem ein Schmierstoffreservoir und eine Vorrichtung zur dosierten Ausgabe des Schmierstoffs angeordnet sind.

Schmierstoffgeber der eingangs genannten Art sind in einer Vielzahl von Ausführungsformen aus dem Stand der Technik bekannt. Die DE-A1-195 44 692 offenbart beispielsweise einen Schmierstoffspender mit elektromotorisch gesteuerter Abgabe des Schmierstoffs an eine Maschine. Diese Schmierstoffgeber dienen dazu, Maschinen- oder Anlagenteile zu schmieren, die schwer zugänglich oder weit entfernt sind oder aber zu deren Schmierung die zu schmierende Maschine gestoppt werden müßte. Um eine kontinuierliche Schmierung dieser Maschinen- und Anlagenteile zu ermöglichen, werden die gattungsgemäßen Schmierstoffgeber an die zu schmierenden Maschinen angeschlossen. Über einen Gaserzeuger oder einen elektromotorischen Antrieb wird dann kontinuierlich aus einem Schmierstoffreservoir Schmierstoff dosiert an die Maschine angegeben. Je nach eingestellter Abgabemenge kann das Schmierstoffreservoir eines Schmierstoffgebers beispielsweise eine kontinuierliche Schmierung für bis zu ein Jahr garantieren. Neben der festen Einstellung nur eines Dosierprogramms sind aus der Praxis Schmierstoffgeber bekannt, die beispielsweise durch eine Umstellung der Getriebeübersetzung auf alternative Schmierprogramme umstellbar sind. Nachteilig bei diesen bekannten Schmierstoffgebern ist jedoch, daß zum Umstellen der Schmierstoffgeber auf ein anderes Schmierstoff-Abgabeprogramm der Schmierstoffgeber demontiert und manuell umgestellt werden muß. Zu diesem Zweck muß je nach Maschinentyp die Maschine abgestellt oder der Schmiervorgang für eine bestimmte Zeit unterbrochen werden.

Ausgehend von diesem Stand der Technik liegt der Erfindung die **Aufgabe** zugrunde, einen Schmierstoffgeber der eingangs genannten Art derart auszugestalten, daß dieser eine flexible Umstellung auf verschiedene Schmierstoff-Ausgabeprogramme ermöglicht, ohne daß diese Umstellung mit einem Maschinenstillstand oder dergleichen verbunden ist.

Die **Lösung** dieser Aufgabenstellung ist erfindungsgemäß dadurch gekennzeichnet, daß die Vorrichtung zur Ausgabe des Schmierstoffs mit einer Steuerungs- und Kontrolleinrichtung zum variablen Betrieb der Ausgabevorrichtung versehen ist und die Steuerungs- und Kontrolleinrichtung ein Empfangsteil aufweist, über das an die Steuerungs- und Kontrolleinrichtung drahtlos ferngesteuert Betriebs- und/oder Servicedaten übermittelbar sind.

Durch die Verwendung der fernsteuerbaren Steuerungs- und Kontrolleinrichtung ist es bei diesem erfindungsgemäßen Schmierstoffgeber erstmalig möglich, die Schmierstoff-Abgabeprogramme beispielsweise von einer Steuerungszentrale aus zu verändern, ohne das eine manuelle Umstellung an jedem einzelnen Schmierstoffgeber erforderlich ist. Durch diese ferngesteuerte Umstellung der Schmierstoffgeber entfallen auch die aus der Praxis bekannten Maschinenstillstandszeiten und Unterbrechungen der Schmierstoffzufuhr, weshalb die Verwendung des erfindungsgemäßen Schmierstoffgebers eine deutliche Arbeitserleichterung und Kostenreduzierung bewirkt.

Gemäß einer bevorzugten Ausführungsform weist die Steuerungs- und Kontrolleinrichtung zusätzlich ein Sendeteil zur drahtlosen Übermittlung von Daten an eine Steuerungszentrale auf. Durch diese zusätzliche Aufnahme eines Sendeteils ist eine direkte Kommunikation zwischen der Steuerungszentrale und jedem einzelnen Schmierstoffgeber möglich. Beispielsweise können auf diese Weise Daten über den Füllzustand des Schmierstoffreservoirs und/oder den Antrieb der Ausgabevorrichtung und/oder die Funktion der Pumpe bzw. Dosierung abgefragt werden.

Die drahtlose Datenübermittlung erfolgt erfindungsgemäß vorteilhafterweise mittels Infrarot- oder Hochfrequenzsignalen.

Um einen reibungslosen Betrieb der Schmierstoffgeber zu gewährleisten, wird erfindungsgemäß vorgeschlagen, daß das Sendeteil der Steuerungs- und Kontrolleinrichtung die aktuellen Betriebs- und Servicedaten periodisch an die Steuerungszentrale übermittelt, so daß durch einen in der Steuerungszentrale stattfindenden lstwert/Sollwert-Abgleich eine kontinuierliche Überwachung der Schmierstoffgeber erfolgt.

Gemäß einer ersten Ausführungsform der Erfindung ist die Vorrichtung zur Ausgabe des Schmierstoffs als elektromotorisch betriebene Pumpen- oder Kolbeneinheit ausgebildet. Bei diesen elektromotorisch betriebenen Ausgabevorrichtungen erfolgt die Energiezufuhr in der Regel über in das Gehäuse des Schmierstoffgebers einsetzbare Batterien. Bei der Verwendung eines solchen Antriebs für die Ausgabevorrichtung ist es bei dem erfindungsgemäßen Schmierstoffgeber selbstverständlich auch möglich, den Ladezustand der Batterien über die Steuerungs- und Kontrolleinrichtung zu überwachen.

Gemäß einer zweiten Ausführungsform der Erfindung ist die Vorrichtung zur Ausgabe des Schmierstoffs als mittels eines Gaserzeugers angetriebene Pumpen- oder Kolbeneinheit ausgebildet. Diese aus der Praxis bekannten Gaserzeuger arbeiten in der Regel derart, daß zwei chemische Substanzen miteinander in Verbindung gebracht werden, die im Laufe der chemischen Reaktion ein Gas erzeugen. Durch diese Gaserzeugung in dem abgeschlossenen Gehäuse des Schmierstoffgebers wird ein Druck aufgebaut, der zum Betrieb der Pumpen- oder Kolbeneinheit verwendet wird. Selbstverständlich ist es auch möglich, ein komprimiertes Gas zum Antrieb der Pumpen-Kolbeneinheit zu verwenden.

Weitere Einzelheiten und Merkmale der Erfindung ergeben sich aus deren nachfolgenden Beschreibung der zugehörigen Zeichnung, in der schematisch der Aufbau eines erfindungsgemäßen Schmierstoffgebers dargestellt ist.

Die dargestellte Anordnung zeigt eine Maschine 1 mit einem an die Maschine 1 angeschlossenen Schmierstoffgeber 2. Zum Verbinden mit der Maschine 1 wird der Schmierstoffgeber 2 über ein am Gehäuse 3 des Schmierstoffgebers 2 angeformtes Gewindestück 4 oder ein Kupplungsstück an die Maschine 1 angeschlossen. Im Gehäuse 3 des Schmierstoffgebers 2 sind insbesondere ein Schmierstoffreservoir 5 und eine Ausgabevorrichtung 6 zur dosierten Ausgabe des Schmierstoffes angeordnet. Das Schmierstoffreservoir 5 besteht vorteilhafterweise aus einer auswechselbaren Kartusche, so daß nach dem Entleeren des Schmierstoffreservoirs 5 lediglich eine neue Kartusche in das Gehäuse 3 des Schmierstoffgebers 2 eingesetzt werden muß.

Die Ausgabevorrichtung 6 zur Ausgabe des Schmierstoffs kann beispielsweise als elektromotorisch oder mittels eines Gaserzeugers betriebene Pumpen- oder Kolbeneinheit ausgebildet sein. Um einen variablen Betrieb der Ausgabevorrichtung 6 zu ermöglichen, das heißt, die Ausgabemenge und/oder die Ausgabefrequenz des Schmierstoffes aus dem Schmierstoffgeber 2 verändern zu können, ist die Ausgabevorrichtung 6 mit einer Steuerungs- und Kontrolleinrichtung 7 versehen, über die der Betrieb der Ausgabevorrichtung 6 variabel einstellbar ist.

Bei dem dargestellten Ausführungsbeispiels ist die Steuerungs- und Kontrolleinrichtung 7 mit einem Empfangsteil 8 und einem Sendeteil 9 versehen, mittels derer von einer Steuerungszentrale 10 drahtlos ferngesteuert Daten an die Steuerungs- und Kontrolleinrichtung 7 übermittelt werden können. Beim dargestellten Ausführungsbeispiel erfolgt die Datenübertragung von der Steuerungszentrale 10 hin zum Empfangsteil 8 bzw. vom Sendeteil 9 hin zur Steuerungszentrale 10 gegebenenfalls jeweils über eine Zwischensendestation 11.

Sollen die Schmierstoffausgabemenge und/oder der Schmierstoffausgabetakt des Schmierstoffgebers 2 verändert werden, so werden ausgehend von der Steuerungszentrale 10 Infrarot- oder Hochfrequenzsignale ausgesandt, die entweder direkt oder unter Zwischenschaltung einer Zwischensendestation 11 von dem Empfangsteil 8 der Steuerungs- und Kontrolleinrichtung 7 empfangen werden. Die Steuerungs- und Kontrolleinrichtung 7 steuert daraufhin die Ausgabevorrichtung 6 zur Ausgabe des Schmierstoffs entsprechend diesen neu übermittelten Daten. Die neu eingestellten Daten werden über das Sendeteil 9 zurück an die Steuerungszentrale 10 übermittelt, in der anschließend ein Istwert/Sollwert-Abgleich stattfindet, um festzustellen, ob die richtigen Betriebsdaten eingestellt wurden. Neben dieser Änderung der Betriebsdaten des Schmierstoffgebers 2 ist es auch möglich, über die Empfangs- und Sendeteile 8, 9 der Steuerungs- und Kontrolleinrichtung 7 periodisch die Betriebsdaten des Schmierstoffgebers 2 an die Steuerungszentrale 10 zu übermitteln, um eine kontinuierliche Überwachung der Schmierstoffgeber 2 zu ermöglichen.

Neben der Überwachung der Betriebsdaten ist es auch möglich über die Steuerungs- und Kontrolleinrichtung 7 den Füllstand des Schmierstoffreservoirs 5 zu überwachen und bei einer elektromotorisch betriebenen Ausgabevorrichtung 6 beispielsweise den Ladezustand der Batterien zu kontrollieren. Auch kann die Förderung des Schmierstoffs selbst in die Überwachung einbezogen werden. Über das Sendeteil 9 können die entsprechenden Daten an die Steuerungszentrale 10 übermittelt werden, die dann rechtzeitig ein Auffüllen des Schmierstoffreservoirs 5 oder einen Austausch der Batterien für die elektromotorisch betriebene Ausgabevorrichtung 6 veranlaßt.

### Bezugszeichenliste

- 1: Maschine
- 2: Schmierstoffgeber
- 3: Gehäuse
- 4: Gewindestück
- 5: Schmierstoffreservoir
- 6: Ausgabevorrichtung
- 7: Steuerungs- und Kontrolleinrichtung
- 8: Empfangsteil
- 9: Sendeteil
- 10: Steuerungszentrale
- 11: Zwischensendestation

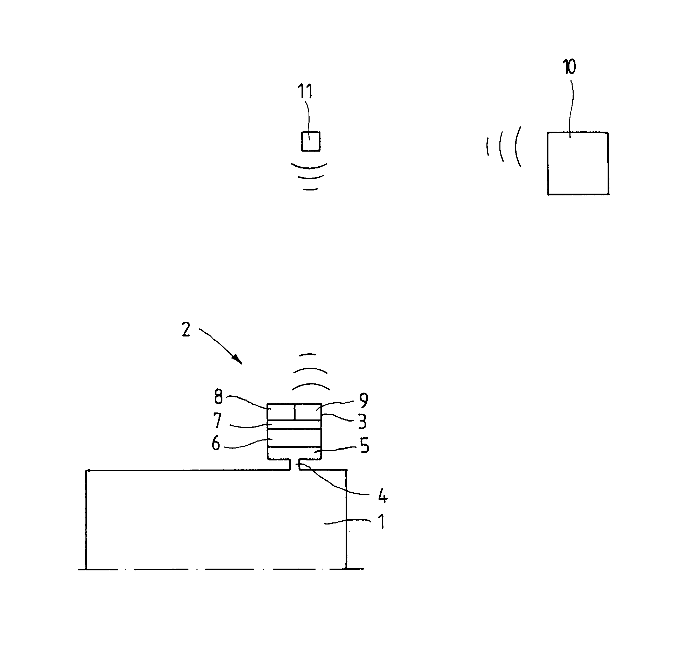

## Patentansprüche

1. Schmierstoffgeber zum kontinuierlichen und automatischen Schmieren von Maschinenteilen, insbesondere Lagern, mit einem an die zu schmierende Maschine (1) anschließbaren Gehäuse (3), in dem ein Schmierstoffreservoir (5) und eine Vorrichtung (6) zur dosierten Ausgabe des Schmierstoffs angeordnet sind,
**dadurch gekennzeichnet,**
daß die Vorrichtung (6) zur Ausgabe des Schmierstoffs mit einer Steuerungs- und Kontrolleinrichtung (7) zum variablen Betrieb der Ausgabevorrichtung (6) versehen ist und die Steuerungs- und Kontrolleinrichtung (7) ein Empfangsteil (8) aufweist, über das an die Steuerungs- und Kontrolleinrichtung (7) drahtlos ferngesteuert Betriebs- und/oder Servicedaten übermittelbar sind.

2. Schmierstoffgeber nach Anspruch 1, dadurch gekennzeichnet, daß die Steuerungs- und Kontrolleinrichtung (7) zusätzlich ein Sendeteil (9) zur drahtlosen Übermittlung von Daten an eine Steuerungszentrale (10) aufweist.

3. Schmierstoffgeber nach Anspruch 1 oder 2, dadurch gekennzeichnet, daß die drahtlose Datenübermittlung mittels Infrarot- oder Hochfrequenzsignalen erfolgt.

4. Schmierstoffgeber nach mindestens einem der Ansprüche 1 bis 3, dadurch gekennzeichnet, daß mittels der Steuerungs- und Kontrolleinrichtung (7) der Füllstand des Schmierstoffreservoirs (5) überwachbar ist.

5. Schmierstoffgeber nach mindestens einem der Ansprüche 2 bis 4, dadurch gekennzeichnet, daß das Sendeteil (9) der Steuerungs- und Kontrollreinrichtung (7) die aktuellen Betriebs- und Servicedaten periodisch an die Steuerungszentrale (10) übermittelt.

6. Schmierstoffgeber nach mindestens einem der Ansprüche 1 bis 5, dadurch gekennzeichnet, daß die Vorrichtung (6) zur Ausgabe des Schmierstoffs als elektromotorisch betriebene Pumpen- oder Kolbeneinheit ausgebildet ist.

7. Schmierstoffgeber nach Anspruch 6, dadurch gekennzeichnet, daß der elektromotorische Antrieb mittels in das Gehäuse (3) einsetzbarer Batterien mit Energie versorgt wird und der Ladungszustand der Batterien über die Steuerungs- und Kontrolleinrichtung (7) überwachbar ist.

8. Schmierstoffgeber nach mindestens einem der Ansprüche 1 bis 5, dadurch gekennzeichnet, daß die Vorrichtung (6) zur Ausgabe des Schmierstoffs als mittels eines Gaserzeugers angetriebene Pumpen- oder Kolbeneinheit ausgebildet ist.
